# EUROPEAN PATENT APPLICATION

(11) **EP 4 675 340 A1**
(43) Date of publication of application: **07.01.2026**
(21) Application number: 24186373.7
(22) Date of filing: 03.07.2024
(51) Int. Cl.: G02C 7/02, G02C 7/06

(54) **POST-PROCESS SMOOTHING OF PROGRESSIVE ADDITION LENS DESIGNS**

(71) Applicant: Crossbows Optical Limited, Northern Ireland BT66 8TP (GB)
(72) Inventor: JORDAN, Christopher, Lurgan, BT66 8TP (GB); MCCOLLUM, Patrick, Lurgan, BT66 8TP (GB); McROBERTS, Richard, Lurgan, BT66 8TP (GB); WEGIELSKA, Dagmara, Lurgan, BT66 8TP (GB)
(74) Representative: Cabinet Novitech

(57) **Abstract**

Method, for example implemented by computer means, for determining an improved surface adapted for a progressive addition lens, wherein the method comprises:
- obtaining an initial surface adapted for the progressive addition lens,
- determining a smoothed surface based on the initial surface,
- determining a mixing ratio map between the smoothed surface and the initial surface at each point of the initial and smoothed surfaces, the mixing ratio map being determined so as to exclude a primary viewing zone of the initial surface,
- determining an improved surface adapted for the progressive addition lens by mixing the initial surface and the smoothed surface on a point-by-point basis using the determined mixing ratio map.

## Description

### TECHNICAL FIELD

The present disclosure relates to a method, for example implemented by computer means, for determining an improved surface adapted for a progressive addition lens, a progressive ophthalmic lens calculating device and to a computer program product comprising one or more stored sequences of instructions that are accessible to a processor and which, when executed by the processor, causes the processor to carry out the steps of the disclosed method.

### BACKGROUND

A progressive lens corrects sight for a range of viewing distances, which can be categorized as near, intermediate, and far. Near distance is associated with the need to see things close up, such as for reading, painting, or doing needlework. Intermediate distance is associated with the need to see things at about arm's length, such as for using a computer monitor, looking at a vehicle dashboard, or talking to others. Far distance is associated with the need to see things beyond arm's length, such as for driving, watching television, or playing sports.

Progressive lenses are configured to provide each of these vision zones with a continuous progression of optical power between each zone. The lens design may depend upon the wearer's particular needs or preferences and can be tailored to suit the wearer.

Variations in mean power along the surface of the progressive addition lens are required to make a progressive power function. Too much variation, or variation that is not controlled, leads to discomfort for the wearer and therefore has a negative impact on the performance of the progressive addition lens. This discomfort is known as the swim effect and can make a wearer feel unbalanced and/or disoriented when using the progressive addition lens.

As the eye travels around the surface of a progressive addition lens there are rises and falls in mean power. An idealized progressive addition lens should, from any point on the lens, rise in mean power as the eye approaches the near reference point and fall in mean power as the eye travels towards the distance reference point. In reality, to the temporal and nasal sides of the near reference point, there are dips in mean power. When the wearer looks through the areas of the lens comprising such dips in mean power, the wearer may feel unbalanced and/or disoriented.

Therefore, there is a need for a new method determining an improved surface adapted for a progressive addition lens that would enhance the comfort of the wearer and in particular would allow reducing the dips in mean power.

### SUMMARY OF THE DISCLOSURE

To this end, the disclosure proposes a method, for example implemented by computer means, for determining an improved surface adapted for a progressive addition lens, wherein the method comprises:
- obtaining an initial surface adapted for the progressive addition lens,
- determining a smoothed surface based on the initial surface,
- determining a mixing ratio map between the smoothed surface and the initial surface at each point of the initial and smoothed surfaces, the mixing ratio map being determined so as to exclude a primary viewing zone of the initial surface,
- determining an improved surface adapted for the progressive addition lens by mixing the initial surface and the smoothed surface on a point-by-point basis using the determined mixing ratio map.

Advantageously, the method according to the disclosure allows smoothing the mean power undulations. The inventors have observed that removing sharp variations in mean power improves the comfort of the lens and reduces the swim effect for the wearer. The method according to the disclosure allows reducing the discomfort of the wearer without effecting the primary viewing zones of the progressive addition lens.

According to further embodiments which can be considered alone in any possible combination:
- the method further comprises prior to determining the mixing ratio, determining the primary viewing zone by determining an initial interpolation function representation of the initial surface, determining based on the initial spline representation or radial basis function or kriging, of an astigmatism map corresponding to the initial surface, the primary viewing zone corresponding to the points of the initial surface having an astigmatism value in the determined astigmatism map smaller than a threshold value, for example smaller than or equal to 0.25 D, for example smaller than or equal to 0.5 D; and/or
- the method further comprises prior to determining the mixing ratio map:
   ∘ determining the location of at least a maximum astigmatism based on the initial spline representation of an astigmatism map, and
   ∘ determining the mixing ratio so as to be maximum at the location corresponding to said at least one maximum astigmatism; and/or
- the method further comprises prior to determining the mixing ratio map:
   ∘ determining an initial mean power map corresponding to the initial surface based on an initial interpolation function representation of the initial surface,
   ∘ determining the location of at least one mean power rebound in the initial mean power map, and
   ∘ determining the mixing ratio so as to be maximum at the location corresponding to said at least one mean power rebound; and/or
- the mixing ratio map is determined with an interpolation function between a minimal value corresponding to the primary viewing zone and a maximum value corresponding to the location of the at least one mean power rebound or the at least one maximum astigmatism; and/or
- a mean power distribution of the initial surface is determined along a circle centered on a reference point of the initial surface, for example the near vision point or the far vision point or the fitting cross, and having a radius greater than or equal to 20 mm, for example greater than or equal to 23 mm, and smaller than or equal to 30 mm, for example greater than or equal to 27 mm; and/or
- the method further comprises after having determined the mean power distribution of the initial surface and prior to determining mean power rebounds, filtering the mean power distribution so as to smoothen the mean power distribution; and/or
- an astigmatism distribution of the initial surface is determined along a circle centered on a reference point of the initial surface, for example the near vision point or the far vision point or the fitting cross, and having a radius greater than or equal to 20 mm, for example greater than or equal to 23 mm, and smaller than or equal to 30 mm, for example greater than or equal to 27 mm; and/or
- the method further comprises after having determined the astigmatism distribution of the initial surface and prior to determining maximum astigmatism, filtering the astigmatism distribution so as to smoothen the astigmatism distribution; and/or
- the mixing ratio map is determined in a polar coordinate system centered on a reference point of the initial surface as the product of a first function dependent on an angle from a reference direction and a second function dependent on the distance from the reference point; and/or
- the value of the first function is positive and smaller than or equal to 0.1, for example smaller than or equal to 0.05, for example equal to 0 for the angles corresponding to the primary viewing zones; and/or
- the value of the first function is smaller than or equal to 1 and greater than or equal to 0.9, for example greater than or equal to 0.95, for example equal to 1, for the angles corresponding to the mean power rebounds locations; and/or
- the value of the second function is substantially equal to 0 from the reference point to a distance greater than or equal to 4 mm and smaller than or equal to 10 mm, for example equal to 5 mm, and increases to be substantially equal to 1 for a distance greater than or equal to 25 mm, for example greater than or equal to 30 mm; and/or
- the smoothed surface is determined using a smoothing technique, for example a radial-basis-function smoothing technique or moving average or Savitzky-Golay filters or local regression or spline smoothing; and/or
- the method further comprises after having determined the improved surface:
   ∘ determining the primary viewing zone of the improved surface by determining an spline representation of the improved surface, determining based on the spline representation of the improved surface, an improved astigmatism map corresponding to the improved surface, the primary viewing zone corresponding to the points of the improved surface having an astigmatism value in the determined astigmatism map smaller than a threshold value, for example smaller than or equal to 0.25 D, for example smaller than or equal to 0.5 D,
   ∘ comparing the surface of the primary viewing zone of the improved surface with the primary viewing zone of the initial surface, and
   ∘ repeating the method according to any of the preceding claims with a reduced smoothing of the initial surface until the primary viewing zone of the improved surface corresponds to at least 90% of the primary viewing zone of the initial surface.

The disclosure also relates to a method of manufacturing a progressive ophthalmic lens comprising at least:
- determining an improved surface adapted for a progressive addition lens by the method according to the disclosure,
- a manufacturing step during which the improved surface is manufactured.

The disclosure further relates to a computer program product comprising one or more stored sequences of instructions that are accessible to a processor and which, when executed by the processor, causes the processor to carry out the steps of the method according to the disclosure.

The disclosure also relates to a computer-readable storage medium having a program recorded thereon; where the program makes the computer execute the method of the disclosure.

Unless specifically stated otherwise, as apparent from the following discussions, it is appreciated that throughout the specification discussions utilizing terms such as "processing", "computing", "calculating", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

Embodiments of the present disclosure may include apparatuses for performing the operations herein. This apparatus may be specially constructed for the desired purposes, or it may comprise a general purpose computer or Digital Signal Processor ("DSP") selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, SIM cards, or any other type of media suitable for storing electronic instructions, and capable of being coupled to a computer system bus.

The methods presented herein are not inherently related to any particular computer or other apparatus. Various general purpose systems may be used with programs in accordance with the teachings herein, or it may prove convenient to construct a more specialized apparatus to perform the desired method. The desired structure for a variety of these systems will appear from the description below.

In addition, embodiments of the present disclosure are not described with reference to any particular programming language. It will be appreciated that a variety of programming languages may be used to implement the teachings of the disclosure as described herein.

### BRIEF DESCRIPTION OF THE DRAWINGS

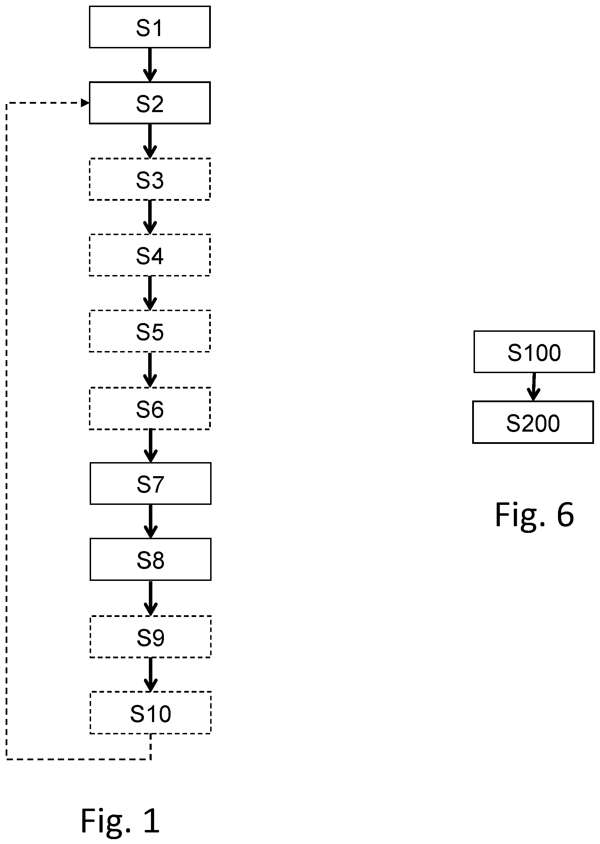

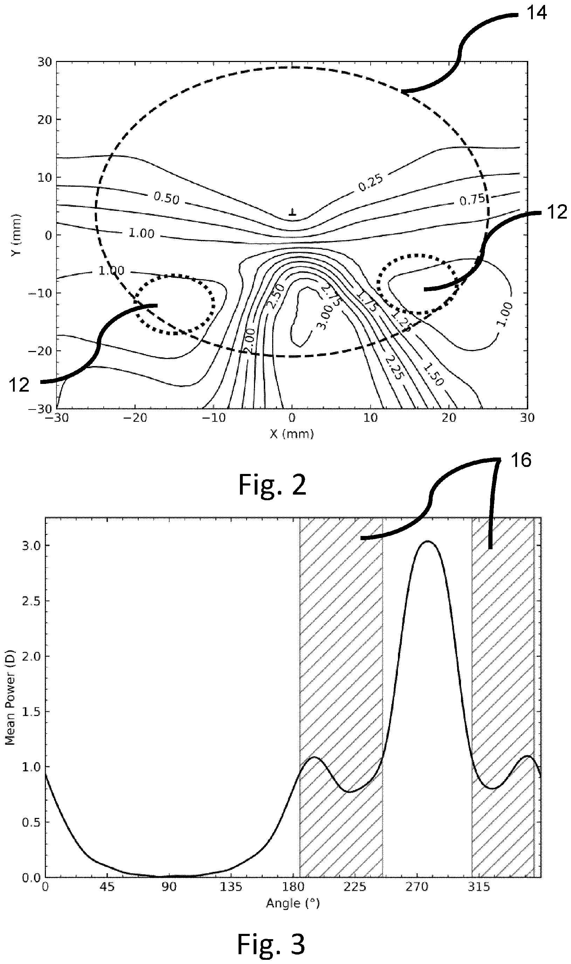

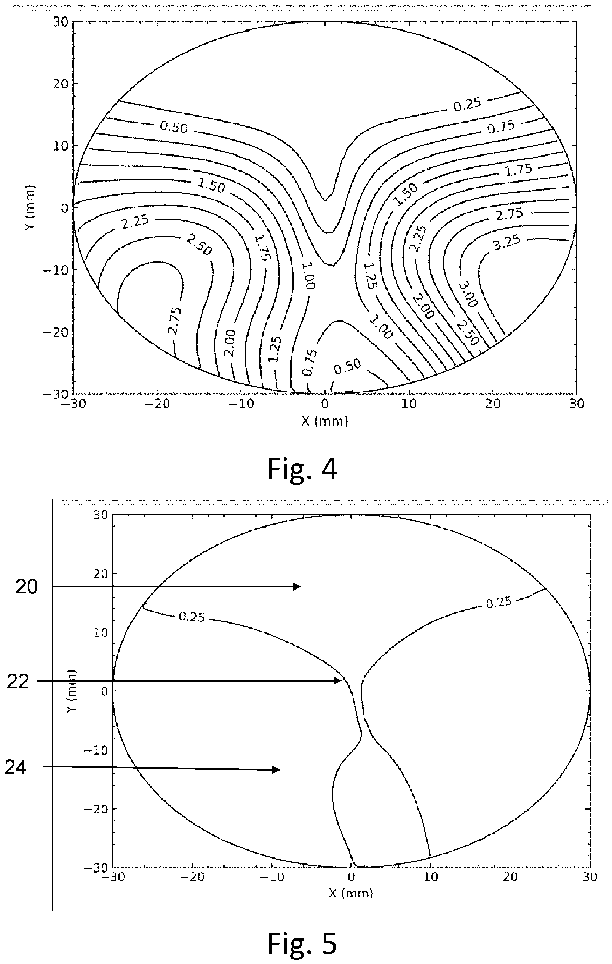

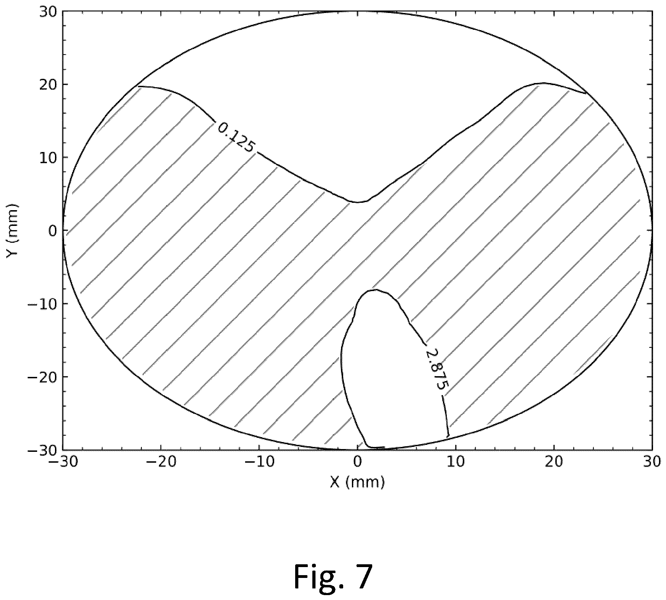

Non-limiting embodiments of the disclosure will now be described with reference to the accompanying drawing wherein:
o figure 1 is flowchart of a method according to the disclosure;
o figure 2 is a mean power map of an initial surface adapted for a progressive addition lens;
o figure 3 is a plot of the mean power as a function of the angle along a circle represented on figure 2;
o figure 4 is an example of a smoothed surface;
o figure 5 is a schematic representation of a primary viewing zone and peripheral zone of an initial surface; and
o figure 6 is a flowchart of a method for manufacturing a progressive addition lens according to the disclosure; and
o figure 7 is schematic representation of areas of stable mean power.

Elements in the figures are illustrated for simplicity and clarity and have not necessarily been drawn to scale. For example, the dimensions of some of the elements in the figure may be exaggerated relative to other elements to help to improve the understanding of the embodiments of the present disclosure.

### DETAILED DESCRIPTION OF EMBODIMENTS OF THE DISCLOSURE

The disclosure relates to a method, for example implemented by computer means, for determining an improved surface adapted for a progressive addition lens.

The improved surface may be the surface of a progressive addition lens, or the surface of a semi-finished lens adapted for a progressive addition lens, or the surface of a mold used to obtain a semi-finished lens or a finished progressive addition lens.

The method according to the disclosure relies on a mixing process between two surfaces: an initial surface adapted for a progressive addition lens and a smoothed surface determined based on the initial surface. To determine the smoothed surface, the method according to the disclosure uses radial-basis-function (RBF) smoothing techniques.

The method according to the invention comprises determining a mixing ratio between the two surfaces such that the far, intermediate, and near vision areas of the initial surface remain consistent. For example, only points which have a cylinder value above a given threshold are mixed. The mixing may also be constrained according to the mean power profile. For example, where there are dips in mean power, the output surface uses only the RBF smoothed surface. As one approaches the given cylinder threshold, the improved surface approaches the initial.

One of the main benefits of the method according to the disclosure is that the method can be applied to any initial progressive surface. It can smooth out the mean power profile in the peripherals of the progressive surface without interfering with the viewing zones. This effectively can be used to make any progressive addition lens more comfortable, without sacrificing any stated performance values.

Prior art approaches aim to reduce the unwanted astigmatism or reduce the mean power. The method according to the disclosure targets a different characteristic, namely smoothing the mean power profile, increasing the comfort of the progressive surface.

As the eye travels around a progressive addition lens there are rises and falls in mean power. An idealized progressive addition lens should, from any point on the lens, rise in mean power as the eye approaches the near vision reference point and fall in mean power as the eye travels towards the far vision reference point. In reality, as shown in figure 1, to the temporal and nasal sides of the near vision reference point, there are dips in mean power.

The method according to the disclosure aims at determining an improved surface which smooths these undulations in mean power.

The method according to the disclosure may be implemented by computer means.

As illustrated on figure 1, the method according to the disclosure may comprises:
- an initial surface obtaining step S1,
- a smoothed surface determining step S2
- a mixing ratio determining step S7, and
- an improved surface determining step S8.

During the initial surface obtaining step S1, an initial surface adapted for the progressive addition lens is obtained. In the initial surface may be the surface of a progressive addition lens, or the surface of a semi-finished optical lens adapted for a progressive addition lens or the surface of a mold adapted to obtained either a finished progressive addition lens or a semi-finished lens adapted for a progressive addition lens.

In the sense of the disclosure, the initial surface may be provided as an input to the method of the disclosure or retrieve from a database of surfaces, for example a database of ophthalmic designs.

As illustrated on figure 2, the initial surface has rises and falls in mean power as the eye travels in a circle about the fitting cross. The method of the disclosure specifically targets the regions 12 where the power varies. Such regions appear more clearly on figure 3, which is a plot of the mean power as of function of angle around the circle 14 illustrated on figure 1. The rises and falls in mean power because more obvious, corresponds to regions 16 on figure 2.

To keep the positive aspects of the initial surface, the method of the disclosure does not target the primary viewing regions where the mean power is stable as shown in figure 7.

The initial surface may be represented as an file of point could (xᵢ,yᵢ,zᵢ).

During the smoothed surface determining step S2, a smoothed surface is determined based on the initial surface as illustrated on figure 4. According to an embodiment of the disclosure, the smoothed surface is determined using radial-basis-function (RBF) smoothing techniques. For example, to create the RBF smoothed surface one may use the SciPy Interpolation library. The RBF function and smoothing values may be set through trial and error depending on the progressive design. Normal values for the smoothing parameter can be ~10⁷, with a quintic RBF.

The smoothed surface may be represented as a file of point could (xₛ,yₛ,zₛ).

During the mixing ratio determining step S7, a mixing ratio map is determined. The mixing ratio map is to be applied between the smoothed surface and the initial surface at each point of the initial and smoothed surfaces, the mixing ratio map being determined so as to exclude a primary viewing zone of the initial surface.

The mixing ratio map may be represented as a file of point could (xₘ, yₘ, Mₘ), where Mₘ is the mixing ratio to be applied to the smoothed surface at the corresponding point when mixing the initial surface and the smoothed surface. As a convention the mixing ratio may typically be comprised between 0 and 1.

The radial basis-function smoothed surface has every point smoothed equally, which distorts the initial surface, in particular the mean power and cylinder distributions. Therefore, the inventors have come up with the idea of considering mixing the initial surface and the smoothed surface according to the undulations in mean power.

To this end and as represented on figure 1, the method according to the invention further comprise after the smoothed determined surface step S2 and prior to the mixing ratio determining step S7, a primary viewing zone determining step S5 during which the primary viewing zone corresponding to the initial surface is determined.

The primary viewing zone determining step S6 may comprise determining an initial interpolation function representation of the initial surface. The interpolation function may be a polynomial function or a spline function.

Based on the interpolation function representation, an astigmatism map corresponding to the initial surface may be determined. Such astigmatism map can be used to determine the primary viewing zone of the initial surface.

Typically, the primary viewing zone corresponding to the points of the initial surface having an astigmatism value in the determined astigmatism map smaller than a threshold value, for example smaller than or equal to 0.25 D, for example smaller than or equal to 0.5 D.

Figure 5 illustrates a primary viewing zone determine for a threshold value of 0.25 D.

On figure 5 is illustrated a primary viewing zone 20, a 0.25 diopter contour 22 and a peripheral zone 24.

In other words, the zone of the initial surface having an astigmatism smaller than or equal to 0.25 D is considered as the primary viewing zone and should be considered when determining the mixing ratio map. For example, for any points within the primary viewing zone, the mixing ratio may be set to zero. That is the initial surface is not mixed with the smoothed surface for the points of the primary viewing zone.

As illustrated on figure 1, the method may further comprise a maximum astigmatism determining step S6 during which the location of at least a maximum astigmatism based on the initial spline representation of an astigmatism map is determined.

During the mixing ratio determining step S7 the mixing ratio may be determined so as to be maximum at the location corresponding to determine at least one maximum astigmatism, for example the mixing ratio is set to 1 for the point (xₘ, yₘ) corresponding the location of the at least one maximum astigmatism.

According to an embodiment of the disclosure, an astigmatism distribution of the initial surface may be determined along a circle centered on a reference point of the initial surface, for example the near vision point of the far vision point or the fitting cross, and having a radius greater than or equal to 20 mm, for example greater than or equal to 23 mm, and smaller than or equal to 30 mm, for example greater than or equal to 27 mm.

After having determined the astigmatism distribution of the initial surface and prior to determining maximum astigmatism, the method according to the disclosure may comprise filtering the astigmatism distribution so as to smoothen the astigmatism distribution and reduce noise in the distribution.

As illustrated on figure 1, the method according to the disclosure may further comprise prior to the mixing ratio determining step S7, an initial mean power map determining step S3.

During the initial mean power map determining step S3, an initial mean power map corresponding to the initial surface is determined based on an initial interpolation function representation of the initial surface.

The method may further comprise a power rebound determining step S4, during which the location of at least one mean power rebound in the initial mean power map is determined.

During the mixing ratio determining step S7, the mixing ratio may be determined so as to be maximum at the location corresponding to said at least one mean power rebound.

A mean power rebound is to be understood as a zone of mean power representation versus angular value where the derivative of the mean power changes twice of sign over an angular interval greater than or equal to 5° and smaller than or equal to 70° at a given radius, greater than or equal to 10 mm from the fitting cross.

According to an embodiment of the disclosure, a mean power distribution of the initial surface is determined along a circle centered on a reference point of the initial surface, for example the near vision point or the far vision point or the fitting cross, and having a radius greater than or equal to 20 mm, for example greater than or equal to 23 mm, and smaller than or equal to 30 mm, for example greater than or equal to 27 mm.

After having determined the mean power distribution of the initial surface and prior to determining mean power rebounds, the method according to the disclosure may comprise filtering the mean power distribution, for example as a function of angle, so as to smoothen the mean power distribution and reduce noise in the distribution.

According to an embodiment of the disclosure, during the mixing ratio determining step S7, the mixing ratio map for example the angular component of the mixing ratio map, is determined with an interpolation function between a minimal value corresponding to the primary viewing zone and a maximum value corresponding to the location of the at least one mean power rebound or the at least one maximum astigmatism.

According to an embodiment of the disclosure, the mixing ratio map, for example the radial component of the mixing ratio map, is determined in a polar coordinate system centered on a reference point of the initial surface as the product of a first function dependent on an angle from a reference direction and a second function dependent on the distance from the reference point. The reference, point may be the far vision point, the near vision points or the far vision point or the fitting cross or any point of reference on the initial surface.

Typically, the value of the first function may be set to be positive and smaller than or equal to 0.1, for example smaller than or equal to 0.05, for example equal to 0 for the angles corresponding to the primary viewing zones.

The value of the first function may further be set to be smaller than or equal to 1 and greater than or equal to 0.9, for example greater than or equal to 0.95, for example equal to 1, for the angles corresponding to the mean power rebounds locations.

Preferably, the value of the second function is substantially equal to 0 from the reference point to a distance greater than or equal to 4 mm and smaller than or equal to 10 mm, for example equal to 5 mm, and increases to be substantially equal to 1 for a distance greater than or equal to 25 mm, for example greater than or equal to 30 mm.

During the improved surface determining step S8, an improved surface adapted for the progressive addition lens is determined by mixing the initial surface and the smoothed surface on a point-by-point basis using the determined mixing ratio map.

Advantageously, the method according to the disclosure allows increasing visual comfort of the wearer by smoothing the surface in the peripheral regions while maintaining optical performance of the progressive addition lens by adjusting the mixing ratio so as to limit the impact in the primary viewing zone.

The method according to the disclosure may comprise checking that the primary viewing zone of the improved surface is not impacted to greatly by the mixing of the initial surface with the smoothed surface. This may happen when the smoothed surface is smoothed too much.

As illustrated on figure 1, the method according to the invention may comprise after the improved surface determining step S8:
- an improved primary viewing zone determining step S9, and
- a comparing step S10.

During the improved primary viewing zone determining step S9 the primary viewing zone of the improved surface is determined by first determining a spline representation of the improved surface and determining based on the spline representation of the improved surface, an improved astigmatism map corresponding to the improved surface. The primary viewing zone of the improved surface corresponds to the points of the improved surface having an astigmatism value in the determined astigmatism map smaller than a threshold value, for example smaller than or equal to 0.25 D, for example smaller than or equal to 0.5 D.

During the comparing step S10, the surface of the primary viewing zone of the improved surface is compared with the primary viewing zone of the initial surface while having the same threshold value for both the initial and improved surfaces.

The method for determining the improved surface may be repeated with a reduced smoothing of the initial surface until the primary viewing zone of the improved surface corresponds to at least 90% of the primary viewing zone of the initial surface.

As illustrated on figure The disclosure also relates to a method of manufacturing a progressive ophthalmic lens, the method comprising at least:
- an improved surface determining step S 100 during which an improved surface adapted for a progressive addition lens by the method previously detailed, and
- a manufacturing step S200 during which the improved surface is manufactured.

The disclosure further relates to a progressive ophthalmic lens calculating device comprising a processing circuitry configured to:
- obtain an initial surface adapted for a progressive addition lens,
- determine a smoothed surface based on the initial surface,
- determine a mixing ratio map between the smoothed surface and the initial surface at each point of the initial and smoothed surfaces, the mixing ratio map being determined so as to exclude the primary viewing zone of the initial surface, and
- determine an improved surface adapted for a progressive addition lens by mixing the initial surface and the smoothed surface on a point-by-point basis using the determined mixing ratio map.

Although not detailed, the processing circuitry is further configured to implement any of the possible combinations of steps of the method of the disclosure detailed previously.

Many further modifications and variations will be apparent to those skilled in the art upon making reference to the foregoing illustrative embodiments, which are given by way of example only and which are not intended to limit the scope of the disclosure, that being determined solely by the appended claims.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the disclosure.

## Claims

1. Method, for example implemented by computer means, for determining an improved surface adapted for a progressive addition lens, wherein the method comprises:
- obtaining an initial surface adapted for the progressive addition lens,
- determining a smoothed surface based on the initial surface,
- determining a mixing ratio map between the smoothed surface and the initial surface at each point of the initial and smoothed surfaces, the mixing ratio map being determined so as to exclude a primary viewing zone of the initial surface,
- determining an improved surface adapted for the progressive addition lens by mixing the initial surface and the smoothed surface on a point-by-point basis using the determined mixing ratio map.

2. The method according to claim 1, further comprising prior to determining the mixing ratio, determining the primary viewing zone by determining an initial interpolation function representation of the initial surface, determining based on the initial interpolation function representation of an astigmatism map corresponding to the initial surface, the primary viewing zone corresponding to the points of the initial surface having an astigmatism value in the determined astigmatism map smaller than a threshold value, for example smaller than or equal to 0.25 D, for example smaller than or equal to 0.5 D.

3. The method according to claim 2, further comprising prior to determining the mixing ratio map:
- determining the location of at least a maximum astigmatism based on the initial spline representation of an astigmatism map, and
- determining the mixing ratio so as to be maximum at the location corresponding to said at least one maximum astigmatism.

4. The method according to any of claims 1 to 3, further comprising prior to determining the mixing ratio map:
- determining an initial mean power map corresponding to the initial surface based on an initial interpolation function representation of the initial surface,
- determining the location of at least one mean power rebound in the initial mean power map, and
- determining the mixing ratio so as to be maximum at the location corresponding to said at least one mean power rebound.

5. The method according to claim 3 or 4, wherein the mixing ratio map is determined with an interpolation function between a minimal value corresponding to the primary viewing zone and a maximum value corresponding to the location of the at least one mean power rebound or the at least one maximum astigmatism.

6. The method according to claim 3, 4 or 5, wherein a mean power distribution of the initial surface is determined along a circle centered on a reference point of the initial surface, for example the near vision point or far vision point or the fitting cross, and having a radius greater than or equal to 20 mm, for example greater than or equal to 23 mm, and smaller than or equal to 30 mm, for example greater than or equal to 27 mm.

7. The method according to the preceding claim, wherein the method further comprises after having determined the mean power distribution of the initial surface and prior to determining mean power rebounds, filtering the mean power distribution, for example as a function of angle, so as to smoothen the mean power distribution.

8. The method according to any of claims 3 to 7, wherein a astigmatism distribution of the initial surface is determined along a circle centered on a reference point of the initial surface, for example the near vision point or far vision point or the fitting cross, and having a radius greater than or equal to 20 mm, for example greater than or equal to 23 mm, and smaller than or equal to 30 mm, for example greater than or equal to 27 mm.

9. The method according to the preceding claim, wherein the method further comprises after having determined the astigmatism distribution of the initial surface and prior to determining maximum astigmatism, filtering the astigmatism distribution, for example as a function of angle, so as to smoothen the astigmatism distribution.

10. The method according to any of the preceding claims, wherein the mixing ratio map, for example the radial component of the mixing ratio map, is determined in a polar coordinate system centered on a reference point of the initial surface as the product of a first function dependent on an angle from a reference direction and a second function dependent on the distance from the reference point.

11. The method according to any of the preceding claims, further comprising after having determining the improved surface, determining the primary viewing zone of the improved surface by determining an spline representation of the improved surface, determining based on the spline representation of the improved surface, an improved astigmatism map corresponding to the improved surface, the primary viewing zone corresponding to the points of the improved surface having an astigmatism value in the determined astigmatism map smaller than a threshold value, for example smaller than or equal to 0.25 D, for example smaller than or equal to 0.5 D, and comparing the surface of the primary viewing zone of the improved surface with the primary viewing zone of the initial surface,
repeating the method according to any of the preceding claims with a reduced smoothing of the initial surface until the primary viewing zone of the improved surface corresponds to at least 90% of the primary viewing zone of the initial surface.

12. A method of manufacturing a progressive ophthalmic lens comprising at least:
- determining an improved surface adapted for a progressive addition lens by the method according to any of claims 1 to 11,
- manufacturing the improved surface.

13. A progressive ophthalmic lens calculating device comprising a processing circuitry configured to:
- obtain an initial surface adapted for a progressive addition lens,
- determine a smoothed surface based on the initial surface,
- determine a mixing ratio map between the smoothed surface and the initial surface at each point of the initial and smoothed surfaces, the mixing ratio map being determined so as to exclude the primary viewing zone of the initial surface,
- determine an improved surface adapted for a progressive addition lens by mixing the initial surface and the smoothed surface on a point-by-point basis using the determined mixing ratio map.

14. A computer program product comprising one or more stored sequences of instructions that are accessible to a processor and which, when executed by the processor, causes the processor to carry out the steps of a method according to any of claims 1 to 12.

15. A computer readable medium carrying one or more sequences of instructions of the computer program product according to claim 14.
